# EUROPEAN PATENT APPLICATION

(11) **EP 4 825 668 A1**
(43) Date of publication of application: **21.10.2026**
(21) Application number: 26171996.7
(22) Date of filing: 13.04.2026
(51) Int. Cl.: B60R 19/52

(54) **IMPROVED FRONT PORTION OF A HEAVY VEHICLE**

(30) Priority: 16.04.2025 IT 202500008526
(71) Applicant: Iveco S.p.A., 10156 Torino (IT)
(72) Inventor: MORANO, Ivan Vito Antonio, 10156 TORINO (IT); ESPOSITO, Carmine Andrea, 10156 TORINO (IT)
(74) Representative: Studio Torta S.p.A.

(57) **Abstract**

Cab of a commercial vehicle (1) comprising a grille (71) comprising a main portion (72) defining a plurality of openings (73, 74), the grille (71) comprising an air guiding element (75) coupled to an edge (72') of the grille (72) and configured to block air passage about such edge (72').

## Description

### CROSS-REFERENCE TO RELATED APPLICATIONS

This patent application claims priority from Italian patent application no. 102025000008526 filed on April 16, 2025, the entire disclosure of which is incorporated herein by reference.

### TECHNICAL FIELD

The present invention concerns a front portion of a heavy vehicle.

The present invention finds its preferred, although not exclusive, application in commercial vehicles such as trucks. Reference will be made to this application by way of example below.

### BACKGROUND OF THE INVENTION

Commercial vehicles such as trucks comprises a cab configured to house both operative systems of the vehicle and driver's seat arrangement.

Driver's seat arrangement is placed, in the most common configuration also known as "cab over", above the operative systems also for sake of providing a great view field over the road.

Accordingly, cabs of commercial vehicles have a vertical extension greater with respect to passenger vehicles thereby having increased problems linked to aerodynamic drag.

Indeed, aerodynamic drag increases squarely with respect to the speed of the vehicle. Accordingly, the problem is particularly felt in commercial vehicles that are further at high speed on highways for long distances.

It is therefore clear that reducing vehicle drag would inevitably reduce fuel consumption and therefore increase the efficiency of the vehicle. Such aim is valid both for traditional internal combustion engines and for electric-traction vehicles or hydrogen-based traction vehicles.

Therefore, the need is felt to reduce aerodynamic drag of commercial vehicle thereby increasing the efficiency of the vehicle.

An aim of the present invention is to satisfy the above mentioned needs in a cost-effective and optimized manner.

### SUMMARY OF THE INVENTION

The aforementioned aim is reached by a cab and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a cab of a commercial vehicle in an opened configuration and provided with the air guiding element according to the invention; and
- Figure 2 is a front view of the grille provided with air guiding element according to the invention.

### DETAILED DESCRIPTION OF THE INVENTION

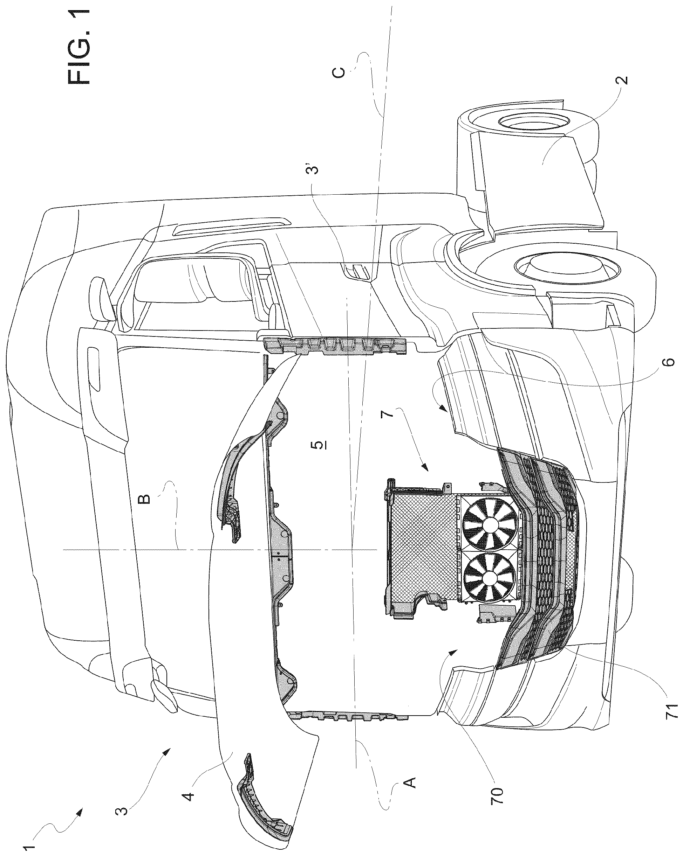

Figure 1 discloses a portion of a vehicle 1 such as a commercial vehicle, e.g. a truck, extending along a longitudinal axis A that coincides, in normal use, with driving direction of the vehicle 1, a transversal axis C and a vertical axis B.

In detail, vehicle 1 comprises a frame 2 and a cab 3 extending over the frame 2 along vertical axis B.

In particular, cab 3 comprises a hood 4 that is carried in a movable manner with respect to the body 3' of the cab 3 to assume a first configuration in which isolates a space 5 of cab 3 with respect to environment and a second configuration in which allows access to space 5 from the environment.

In detail, such hood 4 is linked to the body 3' of cab 3 by a movable connection (not shown) such as a hinge connection, configured to allow rotation of an upper portion of the hood 4 with respect to an axis parallel to transversal axis C.

The space 5 is therefore delimited by a perimeter 6 that matches with the shape defined by hood 4 in the first above mentioned configuration.

Space 5 may house different operative elements of the vehicle 1, in particular a portion of a traction system thereof, and in detail a heat management portion 7 comprising heat exchangers/ventilation means configured to cool down an operative fluid of the vehicle.

In particular, heat management portion 7 is placed in a central portion of the space 5 along transversal axis C and in particular extends along vertical axis B, starting from a lower edge of perimeter 6 and - in the disclosed embodiment - does not reach the upper edge thereof.

Advantageously, the cab 3 comprise a plurality of elements configured to direction the airflow impacting, during driving, on the hood 4 in order to reduce aerodynamic drag.

In detail, the elements can be carried by the hood 4 or by the body 3' of cab 3 along perimeter 6 of the space 5 or housed within space 5. In case such elements are carried body 3' or within space 5, they are preferably, in use, in contact with the hood 4.

In particular, the elements comprise:
- Sealing elements configured to avoid air passage through the hood 4 or between the hood 4 and the body 3 via space 5; and/or
- Guiding elements configured to channel and direction air passage through the hood 4 within space 5.

In the present embodiment, cab 3 comprise a grille assembly 70 provided with a grille 71 and a grille cover 81.

In particular, the grille 71 is provided by an air guiding element 75 as described in the following.

Grille 71 comprises a main portion 72 defining a peculiar shape according to the need and the style of the vehicle 1.

Main portion 72 is therefore comprises a plurality of openings defining the grilled portion. In the disclosed embodiment, some among such openings 73 are empty, i.e. allow air passage, while others among such openings 74 are filled, thereby avoiding air passage.

In detail, empty openings 73 are grouped together defining an overall main passage for air that result blocked with respect to the perimeter of such overall main passage.

In particular, empty openings 73 and filled openings 74 are placed in function of the shape of the heat management portion 7.

The grille 71 is provided with an air guiding element 75 carried by the main portion 75 ad an edge 72' thereof and configured to avoid air passage about such edge 72', thereby forcing air passage within the empty opening 73.

In detail, in the present embodiment, the grille 71 is provided with a pair of air guiding elements 75 at the lateral edges 72' of the main portion 72.

In the following, a single air guiding element will be described for sake of clarity, being the opposite equal. Clearly, the same consideration may apply also for an air guiding element for the upper and/or lower edge of the grille 71.

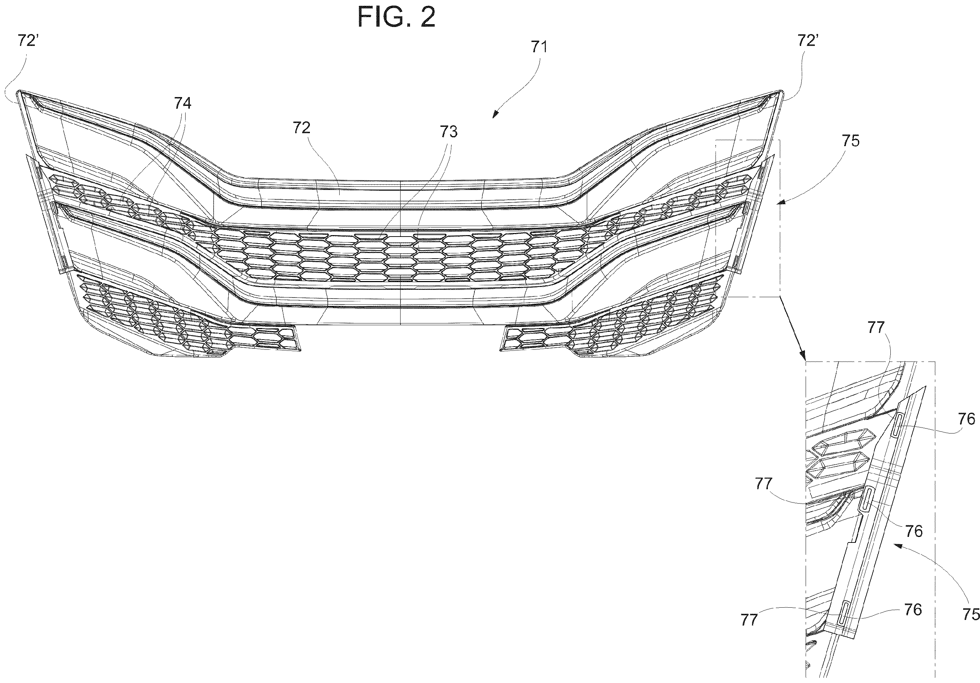

As better shown in figure 2 enlarged portion, the air guiding element 75 is fixedly carried by the main portion 72 at the edge 72', in particular by a resaleable mechanical connection.

In detail, such resaleable mechanical connection comprises a shape coupling between a protrusion 76 realized in one between the main portion 72 and the air guiding element 75 and an opening 77 realized in the other between the main portion 72 and the air guiding element 75.

In the disclosed embodiment, the protrusion 76 extends from the main portion, in detail by edge 72' along longitudinal axis A and the opening 77 is realized in the air guiding element 75.

The air guiding element 75 is substantially a baffle realized in polymeric material, such as rubber. In use, it contacts the nearing portion of the body 3' of cab, thereby locking air.

Accordingly, the shape of the air guiding element 75 may vary. In the disclosed embodiment, it is placed substantially in a central portion along vertical axis B of the edge 72' of the grille 71. Moreover, it extends only for a portion of the edge 72', however, it is cleat that would extend wider or shorter according to the specific needs.

The operation of the embodiment of the invention as described above is the following.

The guiding element 75 avoids air passage at lateral portions of the grille 71 thereby air is forced towards the centre portion of the grille 71 where present openings 73, i.e. faced to the heat management portion 7, thereby cooling down the operative fluid and reducing air drag due to passage of air through remaining portions of space 5.

In view of the foregoing, the advantages of the grille provided with air guiding element, cab and vehicle according to the invention are apparent.

Thanks to the claimed guiding element, the air passage is channeled towards the required portion of space 5 thereby allowing at the same time maximizing air passage towards heat management portion 7 and avoiding the passage of air towards the perimeter of space 5.

In this way, drag is reduced and, moreover, efficiency of the heat management portion 7 increased. The two effects synergically acts to improve efficiency of the vehicle 1

In particular, the proposed shape is voted to allow housing of required operative systems while channeling air passage.

Furthermore, the realization in plastic material and in low pieces, e.g. by molding, allows cost-effective production of the guiding element.

It is clear that modifications can be made to the described grille provided with air guiding element, cab and vehicle which do not extend beyond the scope of protection defined by the claims.

For example, the cab of the vehicle may be different and similarly hood. Accordingly, the shape and opening/s of the portions of the vehicular element claimed may be different.

## Claims

1. Cab (3) for a commercial vehicle (1) comprising a body (3') and a grille (71), said grille (71) comprising a main portion (72) defining a plurality of openings (73, 74), said grille (71) comprising an air guiding element (75) coupled to an edge (72') of said grille (72) and configured to block air passage about such edge (72')., wherein said air guiding element (75) avoids air passage between a lateral side (72') od said grille (71) and said body (3').

2. Cab according to claim 1, wherein said air guiding element (75) is realized polymeric material.

3. Cab according to claim 1 or 2, wherein said air guiding element (75) is realized rubber.

4. Cab according to any of the preceding claims, wherein said side (72') is a lateral side of said grille (71).

5. Cab according to any of the preceding claims, wherein air guiding element (75) occupies only a portion of the extension of said side (72').

6. Cab according to any of the preceding claims, wherein air guiding element (75) is realized as one piece.

7. Cab according to any of the preceding claims, wherein air guiding element (75) is coupler to said main portion (72) with a shape coupling.

8. Cab according to claim 7, wherein said shape coupling comprises a protrusion (76) realized in one between main portion (72) and air guiding element (75) and an opening (77) realized in the other between main portion (72) and air guiding element (75).

9. Cab according to any of the preceding claims, wherein said some among said openings (73, 74) are empty and others are filled, so that air is forced to pass within the empty openings (73).

10. Cab according to claim 9, wherein said empty openings (73) are grouped in a specific portion of said main portion (72) of said grille (71).

11. Vehicle (1) comprising a cab according to any of the preceding claims
